# EUROPÄISCHE PATENTSCHRIFT

(11) **EP 2 670 627 B1**
(45) Veröffentlichungstag und Bekanntmachung des Hinweises auf die Patenterteilung: **03.05.2017**
(21) Anmeldenummer: 12707223.9
(22) Anmeldetag: 03.02.2012
(51) Int. Cl.: B60N 2/02, B60N 2/12, B60N 2/235, B60N 2/30, B60N 2/36, B60N 2/44, G05G 1/015

(54) **BETÄTIGUNGSEINHEIT UND BESCHLAGSSYSTEM FÜR EINEN FAHRZEUGSITZ**
ACTUATOR AND HARDWARE SYSTEM FOR A VEHICLE SEAT
UNITÉ D'ACTIONNEMENT ET SYSTÈME DE FERRURE POUR UN SIÈGE DE VÉHICULE

(30) Priorität: 03.02.2011 DE 102011010700; 18.04.2011 DE 102011018330
(43) Veröffentlichungstag der Anmeldung: 11.12.2013
(73) Patentinhaber: Johnson Controls Components GmbH & Co. KG, 67657 Kaiserslautern (DE)
(72) Erfinder: TEUFEL, Ingo, 67806 Rockenhausen (DE); KÄMMERER, Joachim, 67663 Kaiserslautern (DE); RECKTENWALD, Ralph, 66629 Freisen (DE)
(74) Vertreter: Wolff, Felix
(86) Internationale Anmeldenummer: PCT/EP2012/000481
(87) Internationale Veröffentlichungsnummer: WO 2012/104093

(56) Entgegenhaltungen:
- DE-A1-102005 006 565
- DE-A1-102006 058 232
- US-A1- 2008 042 481

## Beschreibung

### Stand der Technik

Die Erfindung betrifft eine Betätigungseinheit für einen Fahrzeugsitz mit den Merkmalen des Oberbegriffs des Anspruches 1. Ferner betrifft die Erfindung ein Beschlagsystem für einen Fahrzeugsitz mit den Merkmalen des Oberbegriffs des Anspruchs 11.

Ein Beschlagsystem dieser Art mit Rastbeschlägen ist aus der DE 103 35 869 A1 bekannt. Um den Verriegelungszustand eines Rastbeschlags anzuzeigen, wird in der DE 10 2005 031 918 B4 vorgeschlagen, jeweils ein Loch am Beschlag und an einem Bedienhebel vorzusehen, die im verriegelten Zustand deckungsgleich sind.

### Offenbarung der Erfindung

Der Erfindung liegt die Aufgabe zu Grunde, eine Betätigungseinheit für einen Fahrzeugsitz mit einer Verriegelungsanzeige zu verbessern. Diese Aufgabe wird erfindungsgemäß durch eine Betätigungseinheit für einen Fahrzeugsitz mit den Merkmalen des Anspruches 1 gelöst. Vorteilhafte Ausgestaltungen sind Gegenstand der Unteransprüche 2 bis 10.

Die logische Verknüpfung der beiden Indikatoren, die jeweils einem Beschlag zugeordnet sind, erlaubt die Anordnung eines Gesamtindikators an einer gut sichtbaren Stelle, insbesondere im oberen Bereich der Lehne auf der nach außen gewandten (ersten) Fahrzeugsitzseite, im Bereich des Bedienhebels zum Entriegeln des Beschlagsystems. Die OR-Funktion der "warnenden" Anzeige des entriegelten Zustandes (z.B. Schloss auf erster Fahrzeugsitzseite entriegelt und/oder Schloss auf zweiter Fahrzeugsitzseite entriegelt oder Schienenverriegelung auf erster Fahrzeugsitzseite entriegelt und/oder Schienenverriegelung auf zweiter Fahrzeugsitzseite entriegelt) ist zugleich eine AND-Funktion für die Anzeige des ordnungsgemäß verriegelten Zustand, d.h. die fehlenden Sichtbarkeit des Gesamtindikators zeigt den verriegelten Zustand an.

Bei der Kraftübertragung handelt es sich bevorzugt um Bowdenzüge, jedoch wären auch andere Übertragungen, die mit Relatiwerschiebungen einhergehen, möglich. Insbesondere bevorzugt wirken die Indikatoren mit den Seelen der Bowdenzüge zusammen, jedoch ist auch ein Zusammenwirken der Hüllen mit den Indikatoren möglich.

Die erfindungsgemäße Betätigungseinheit wird in Fahrzeugsitzen bevorzugt zur Anzeige einer Verriegelung der Sitzanlage nach einem Freischwenken eingesetzt, insbesondere bei Rücksitzen. Es kann aber auch an anderen Stellen verwendet werden und andere Bowdenzugübertragungen aufweisen.

Ferner liegt der Erfindung die Aufgabe zu Grunde, ein Beschlagsystem der eingangs genannten Art zu verbessern. Diese Aufgabe wird erfindungsgemäß durch ein Beschlagsystem mit den Merkmalen des Anspruches 11 gelöst. Vorteilhafte Ausgestaltungen sind Gegenstand der Unteransprüche 12 bis 20.

Die logische Verknüpfung der beiden Indikatoren, die jeweils einem Beschlag zugeordnet sind, erlaubt die Anordnung eines Gesamtindikators an einer gut sichtbaren Stelle, insbesondere auf der nach außen gewandten (ersten) Fahrzeugsitzseite, auf welcher in der Regel auch der Bedienhebel für das Beschlagsystem angeordnet ist. Die OR-Funktion der "warnenden" Anzeige des entriegelten Zustandes (Beschlag auf erster Fahrzeugsitzseite entriegelt und/oder Beschlag auf zweiter Fahrzeugsitzseite entriegelt) ist zugleich eine AND-Funktion für die Anzeige des verriegelten Zustand, d.h. die fehlenden Sichtbarkeit des Gesamtindikators zeigt den verriegelten Zustand beider Beschläge an. Soweit die Beschläge miteinander verriegelbare Beschlagteile aufweisen, die durch Drehung eines Mitnehmers entriegelbar sind, wird der Verriegelungszustand der Beschläge vorzugsweise an der Winkellage der jeweiligen Mitnehmer abgelesen, welche jeweils drehfest mit einem Indikator verbunden sind. Um die Winkellage von der zweiten Fahrzeugsitzseite auf die erste Fahrzeugsitzseite zu übertragen, wird vorzugsweise die Übertragungsstange benutzt, welche zugleich dem Entriegeln dient. Vorzugsweise ist ein Adapter vorgesehen, welcher jeweils mit einem Freigang mit den beiden Mitnehmern auf Mitnahme gekoppelt ist, und welcher vom Bedienhebel gedreht wird. Der Freigang entkoppelt die beiden Beschläge beim Verriegeln.

Das erfindungsgemäße Beschlagsystem weist insbesondere die erfindungsgemäße Betätigungseinheit auf, wobei der Bedienhebel vorzugsweise mittelbar oder unmittelbar als Griff der Betätigungseinheit fungiert.

Das erfindungsgemäße Beschlagsystem wird in Fahrzeugsitzen bevorzugt zur Einstellung der Lehnenneigung eingesetzt, insbesondere bei Rücksitzen Es kann aber auch an anderen Stellen verwendet werden und andere Beschläge aufweisen. Insbesondere soll der Begriff "Beschlag" vorliegend so weit gefasst sein, dass darunter auch andere Verriegelungsvorrichtungen, beispielsweise Drehfallenschlösser, fallen.

Im folgenden ist die Erfindung anhand eines in der Zeichnung dargestellten Ausführungsbeispiels näher erläutert.

### Kurze Beschreibung der Zeichnungen

Es zeigen:
- Fig. 1: eine perspektivische Ansicht eines Fahrzeugsitzes,
- Fig. 2: eine teilweise Darstellung der Verriegelungsbetätigungsvorrichtung in verriegelter Stellung,
- Fig. 3: eine Detailansicht der erfindungsgemäßen Betätigungseinheit gemäß Fig. 2,
- Fig. 4: eine andere Detailansicht der Verriegelungen gemäß Fig. 2,
- Fig. 5: eine teilweise Darstellung der Verriegelungsbetätigungsvorrichtung in vollständig entriegelter Stellung,
- Fig. 6: eine Detailansicht der Betätigungseinheit gemäß Fig. 5,
- Fig. 7: eine teilweise Darstellung der Verriegelungsbetätigungsvorrichtung in vollständig entriegelter Stellung während des Vorklappens in die Bodenstellung,
- Fig. 8: eine Detailansicht der Betätigungseinheit gemäß Fig. 7,
- Fig. 9: eine teilweise Darstellung der Verriegelungsbetätigungsvorrichtung bei nicht ordnungsgemäß verriegeltem Schloss auf einer Seite,
- Fig. 10: eine Detailansicht der Betätigungseinheit gemäß Fig. 9,
- Fig. 11: eine teilweise Darstellung der Verriegelungsbetätigungsvorrichtung bei nicht ordnungsgemäß verriegeltem Schloss auf der anderen Seite,
- Fig. 12: eine Detailansicht der Betätigungseinheit gemäß Fig. 11,
- Fig. 13: eine Detailansicht der Betätigungseinheit aus anderer Perspektive,
- Fig. 14: eine erste Explosionsdarstellung der Betätigungseinheit,
- Fig. 15: eine zweite Explosionsdarstellung der Betätigungseinheit,
- Fig. 16: eine teilweise geschnitten dargestellte Seitenansicht des Fahrzeugsitzes in der Gebrauchsstellung,
- Fig. 17: eine Teilansicht von Fig. 16 ohne Basis, Sitzkissen und Lehne,
- Fig. 18: eine Fig. 16 entsprechende Ansicht in der Einstiegsstellung,
- Fig. 19: eine Fig. 16 entsprechende Ansicht in der Bodenstellung, und
- Fig. 20: eine Betätigungseinheit gemäß einer Abwandlung des Ausführungsbeispiels.

Es zeigen ferner:
- Fig. 21: eine perspektivische Ansicht eines erfindungsgemäßen Beschlagsystems,
- Fig. 22: eine Explosionsdarstellung eines Teils des Beschlagsystems,
- Fig. 23: eine Teilansicht eines Fahrzeugsitzes,
- Fig. 24: eine schematische Darstellung eines Fahrzeugsitzes,
- Fig. 25: eine axiale Teilansicht des Beschlagsystems auf der ersten Fahrzeugsitzseite,
- Fig. 26: eine radiale Teilansicht des Beschlagsystems auf der ersten Fahrzeugsitzseite,
- Fig. 27: einen Schnitt entlang der Linie VII-VII in Fig. 26,
- Fig. 28: einen Schnitt entlang der Linie VIII-VIII in Fig. 26,
- Fig. 29: eine perspektivische Teilansicht des Beschlagsystems auf der ersten Fahrzeugsitzseite mit verriegelten Beschlägen,
- Fig. 30: einen Schnitt durch einen Teil des Beschlagsystems auf der ersten Fahrzeugsitzseite mit verriegelten Beschlägen,
- Fig. 31: eine Teilansicht entsprechend Fig. 29 mit wenigstens einem entriegelten Beschlag,
- Fig. 32: einen Schnitt entsprechend Fig. 30 mit zwei entriegelten Beschlägen,
- Fig. 33: einen Schnitt entsprechend Fig. 30 mit einem entriegelten Beschlag auf der ersten Fahrzeugsitzseite,
- Fig. 34: einen Schnitt entsprechend Fig. 30 mit einem entriegelten Beschlag auf der zweiten Fahrzeugsitzseite,
- Fig. 35: einen radial Schnitt durch einen Beschlag, und
- Fig. 36: einen axialen Schnitt durch einen Beschlag entlang der Linie XV-XV in Fig. 35.

### Ausführungsformen der Erfindung

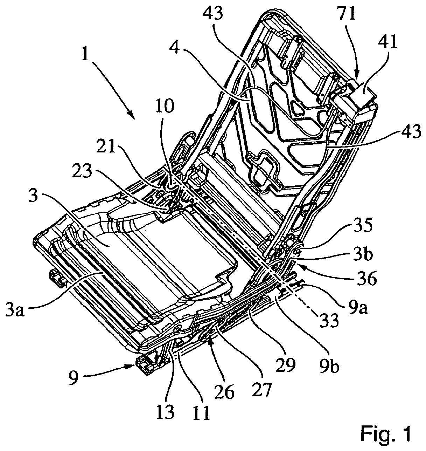

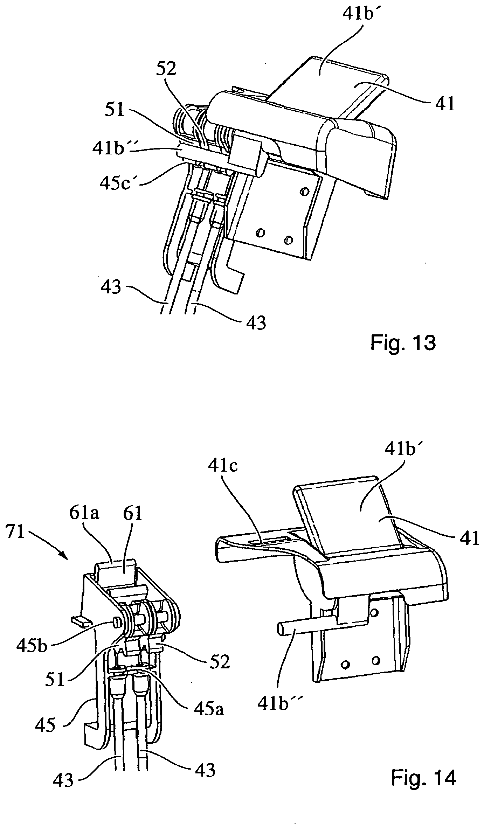

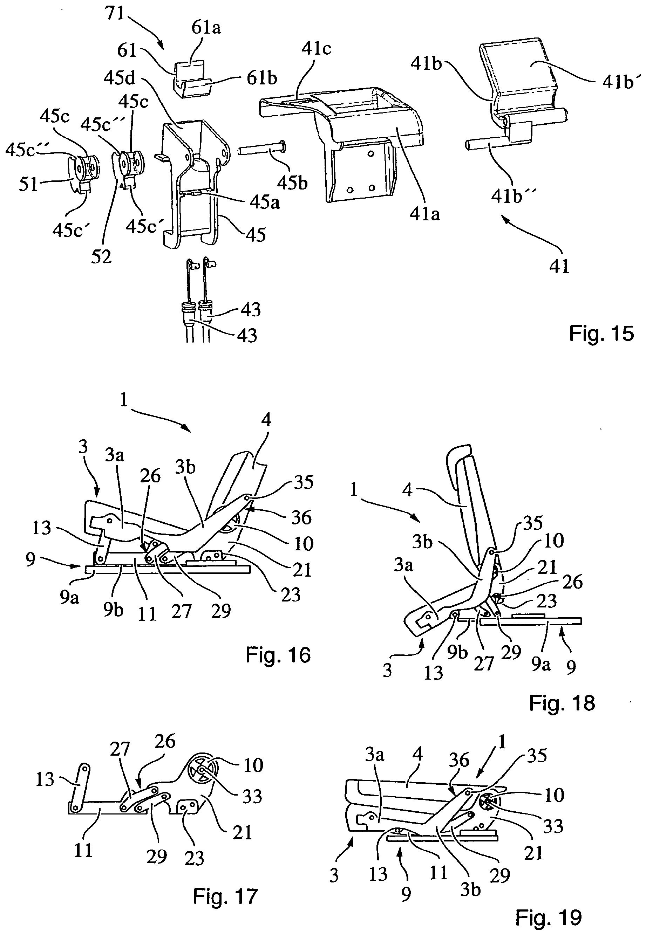

Nachfolgend wir eine beispielhafte Ausführungsform der vorliegenden Erfindung anhand der Figuren 1 bis 20 illustriert:
Ein Fahrzeugsitz 1, der beispielsweise als Außensitz einer mittleren oder hinteren Sitzreihe eines Kraftfahrzeuges, beispielsweise eines Vans, vorgesehen ist, weist ein Sitzkissen 3 und eine Lehne 4 auf. Bei den nachfolgenden Richtungsangaben wird davon ausgegangen, dass der Fahrzeugsitz 1 in Vorwärtsfahrtrichtung im Kraftfahrzeug angeordnet ist, wobei in einer zur Personenbeförderung geeigneten Gebrauchsstellung des Fahrzeugsitzes 1 sich die Lehne 4 am hinteren Ende des Sitzkissen 3 befindet. Die Lehne 4 ist vorliegend mittels Beschlägen 10 in ihrer Neigung einstellbar, so dass mehrere Gebrauchsstellungen definiert sind. Unter dem Begriff Sitzkissens 3 soll die gesamte Baugruppe, bestehend aus einer Struktur, vorliegend ein Sitzkissenträger 3a und einem bezogenen Polster, verstanden werden. Soweit Bauteile am Sitzkissen 3 angelenkt sind, ist hierunter eine Anlenkung an der Struktur des Sitzkissens 3 zu verstehen. Entsprechendes gilt für die Lehne 4. Diese Struktur des Fahrzeugsitzes 1 ist in der DE 10 2008 050 468 B3 beschrieben, deren diesbezüglicher Offenbarungsgehalt ausdrücklich einbezogen wird.

Im folgenden wird der Einfachheit halber nur die linke Fahrzeugsitzseite des im wesentlichen symmetrischen Fahrzeugsitzes 1 beschrieben, d.h. die nachfolgend genannten Bauteile sind, wenn nicht abweichend beschrieben, doppelt (ggf. spiegelsymmetrisch) vorhanden. Zunächst wird der Fahrzeugsitz 1 in einer speziellen Gebrauchsstellung, nämlich der Designstellung, beschrieben, in welcher die Lehne 4 um beispielsweise 23° gegenüber der Vertikalen nach hinten geneigt ist. Eine Basis 9 des Fahrzeugsitzes 1 ist mit der Struktur des Kraftfahrzeuges verbunden.

Die Basis 9 ist im Ausführungsbeispiel als Sitzschienenanordnung ausgebildet, welches die Möglichkeit einer Längseinstellung des Fahrzeugsitzes 1 eröffnet, kann aber alternativ als ein einziges, fest mit der Fahrzeugstruktur verbundenes Bauteil ausgebildet oder die Fahrzeugstruktur selbst sein. Die verschiedenen Varianten der Basis 9 können auch zu einem Baukastensystem zusammengefasst sein. Die Basis 9 weist vorliegend eine direkt mit der Fahrzeugstruktur verbundene erste Sitzschiene 9a und eine relativ zu dieser in Längsrichtung verschiebliche zweite Sitzschiene 9b auf. Die beiden im wesentlichen U-förmig profilierten Sitzschienen 9a und 9b hintergreifen einander wechselseitig mit ihren nach innen bzw. nach außen gebogenen Längsrändern und sind - mittels einer an sich bekannten Schienenverriegelung - miteinander verriegelbar.

An der Basis 9 ist ein vorderer Fuß 11 angebracht, und zwar vorliegend fest mit der zweiten Sitzschiene 9b verbunden. Der vordere Fuß 11 könnte aber auch lösbar mit der Basis 9 verriegelt sein. Am vorderen Fuß 11 ist mittels einer Schwinge 13 das Sitzkissen 3 angelenkt, wobei diese Schwinge 13 an beiden Enden mit Gelenken versehen ist, von denen eines die Anlenkung am vorderen Fuß 11 und das andere die Anlenkung am vorderen Ende des Sitzkissens 3 bildet.

An der Basis 9 ist ferner in Fahrtrichtung hinter dem vorderen Fuß 11 ein vom vorderen Fuß 11 gesondert ausgebildeter hinterer Fuß 21 angeordnet, welcher mittels eines am hinteren Fuß 21 angebrachten Schlosses 23, auf welches auch als Verriegelung Bezug genommen wird, lösbar mit der Basis 9 verriegelt ist, genauer gesagt mit einem basisfesten Gegenelement, beispielsweise einem Bolzen in der zweiten Sitzschiene 9b, verriegelt, und damit indirekt mit der Fahrzeugstruktur verbunden ist.

Zudem ist der hintere Fuß 21 mittels eines Hinterfuß-Viergelenks 26 am vorderen Fuß 11 angelenkt, wobei die vier Getriebeglieder des Hinterfuß-Viergelenks 26 einen ersten Lenker 27 und einen in Fahrtrichtung hinter dem ersten Lenker 27 angeordneten zweiten Lenker 29 umfassen, die jeweils an beiden Enden Gelenke aufweisen. Somit ist der hintere Fuß 21 mittels der Lenker 27 und 29 gelenkig mit der Basis 9 verbunden. In den Gebrauchsstellungen wird das Hinterfuß-Viergelenk 26 mittels des Schlosses 23 verriegelt gehalten. Am hinteren Fuß 21 ist auch ein erstes Beschlagteil des Beschlages 10 angebracht, während ein relativ zum ersten Beschlagteil um die Lehnenschwenkachse 33 schwenkbares und mit diesem verriegelbares zweites Beschlagteil des Beschlages 10 an der Lehne 4 befestigt ist. Die Lehne 4 ist somit mittels des Beschlags 10 in ihrer Neigung relativ zum hinteren Fuß 21 einstellbar. Die Lehnenschwenkachse 33 verläuft horizontal zwischen beiden Fahrzeugsitzseiten und kann bei körperlicher Ausbildung als Übertragungsstange zwischen den beidseitig vorhandenen Beschlägen 10 dienen.

Das Sitzkissen 3 ist beidseitig mittels genau eines Gelenks 35 unmittelbar an der Lehne 4 angelenkt. Hierzu ist der rahmenförmige Sitzkissenträger 3a, genauer gesagt dessen beide Seitenteile, in Fahrtrichtung hinten mit einem Arm 3b versehen, der vorliegend am Sitzkissenträger 3a angeformt ist und schräg nach oben (und hinten) absteht. Am Ende des Armes 3b ist das Gelenk 35 angeordnet. Das Gelenk 35 ist versetzt zur Lehnenschwenkachse 33 angeordnet und weist eine zur Lehnenschwenkachse 33 parallele Schwenkachse auf. In der Designstellung befindet sich das Gelenk 35 oberhalb und in Fahrrichtung hinter der Lehnenschwenkachse 33. Die beiden Gelenke der Schwinge 13, der die Lehnenschwenkachse 33 aufweisende Beschlag 10 und das Gelenk 35 bilden ein weiteres Viergelenk, im folgenden als Kissen-Viergelenk 36 bezeichnet. In den Gebrauchsstellungen wird dieses Kissen-Viergelenk 36 durch den Beschlag 10 verriegelt gehalten.

Bei der Neigungseinstellung der Lehne 4 wird auf jeder Fahrzeugsitzseite der Beschlag 10 entriegelt, die Lehne 4 um die Lehnenschwenkachse 33 in die gewünschte Stellung geschwenkt, wobei sich auch das Kissen-Viergelenk 36 bewegt, und dann jeder Beschlag 10 wieder verriegelt. Die Bewegung des Kissen-Viergelenks 36 ändert auch die Neigung des Sitzkissens 3 etwas. Die Lehne 4 kann auch flach nach hinten geschwenkt werden, so dass der Fahrzeugsitz 1 eine Liegestellung einnimmt.

Zum Überführen des Fahrzeugsitzes 1 in eine Einstiegsstellung als eine ausgezeichnete Nichtgebrauchsstellung wird das Schloss 23 entriegelt. Hierfür wird ein Griff 41, welcher an der äußeren Oberseite der Lehne 4 positioniert ist, vom Benutzer betätigt, wie an späterer Stelle näher beschrieben ist. Durch die Betätigung des Griffs 41 erfolgt eine Kraftübertragung über zwei Bowdenzüge 43 an die beiden Schlösser 23, welche dadurch entriegeln. Der hintere Fuß 21 wird nun mittels des Hinterfuß-Viergelenks 26, d.h. der Lenker 27 und 29, nach vorne versetzt, d.h. durch die Überlagerung mehrere Schwenkbewegungen wird der hintere Fuß 21 relativ zur Basis 9 nach oben und vorne bewegt, wodurch er sich von der Basis 9 entfernt. Der Beschlag 10 bleibt jeweils verriegelt. Dadurch ist die Lehne 4 in starrer Anordnung relativ zum hinteren Fuß 21, schwenkt aber insgesamt nach vorne. Die nach vorne schwenkende Schwinge 13 senkt das vordere Ende des Sitzkissens 3 ab, während die Versatzbewegung des hinteren Fußes 21 das hintere Ende des Sitzkissens 3 anhebt.

Wenn die Einstiegsstellung erreicht ist, in welcher der Zugang zu einer hinteren Sitzreihe erleichtert ist, kann optional das Schloss 23 oder eine andere Verriegelungsvorrichtung mit dem vorderen Fuß 11 verriegeln, d.h. der hintere Fuß 21 und der vordere Fuß 11 sind vorzugsweise miteinander verriegelt. Die Rückkehr in die zuvor eingenommene Gebrauchsstellung erfolgt nach dem Lösen der besagten Verriegelung zwischen den Füßen 11 und 21 in umgekehrter Reihenfolge der beschriebenen Schritte.

Durch Vergleich zwischen Gebrauchsstellung und der Einstiegsstellung ist ein Ersatzdrehpunkt für das Hinterfuß-Viergelenk 26 definierbar, d.h. wäre der hintere Fuß 21 an diesem Ersatzdrehpunkt an der Basis 9 oder Fahrzeugstruktur angelenkt, hätte eine Schwenkbewegung des Fahrzeugsitzes 1 um diesen Ersatzdrehpunkt die gleiche Anfangs- und Endposition. Der Ersatzdrehpunkt liegt bei der erfindungsgemäßen Lösung allerdings deutlich unterhalb der Basis 9, kann also nicht realisiert werden. Mit einer unmittelbaren Anlenkung des hinteren Fußes 21 an der Basis 9 könnte das gewünschte Einstiegsmaß (d.g. die Abmessung des zugänglichen Raumes hinter dem Fahrzeugsitz 1) nicht erreicht werden. Somit erfolgt mit dem Hinterfuß-Viergelenk 26 eine bessere Ausnutzung des Schwenkwinkelbereichs bei kürzeren Schwenkarmen.

Optional wird beim Übergang von der Gebrauchsstellung in die Einstiegsstellung die Verriegelung der Sitzschienen 9a und 9b entriegelt, so dass die zweite Sitzschiene 9b nach vorne verfahrbar ist, was den Raum hinter dem Fahrzeugsitz 1, also das Einstiegsmaß, vergrößert und den Zugang zusätzlich erleichtert. Bevorzugt ist eine zwangsgesteuerte Entriegelung der Sitzschienen 9a und 9b, beispielsweise indem einer der Lenker 27 und 29 beim Schwenken die Entriegelung betätigt, wie dies beispielsweise in der DE 10 2007 636 450 B3 offenbart ist. Alternativ ist auch eine andere Reihenfolge möglich.

Zum Überführen des Fahrzeugsitzes 1 in eine Bodenstellung (Flat-Floor-Position) als eine weitere ausgezeichnete Nichtgebrauchsstellung, in welcher ein vergrößerter Laderaum zur Verfügung steht, wird die Lehne 4 nach Entriegeln des Beschlags 10 nach vorne geklappt. Wie bei der Neigungseinstellung bewegt sich das Kissen-Viergelenk 36. Durch Bewegen der Schwinge 13 nach vorne beginnt sich das Kissen-Viergelenk 36 und damit das Sitzkissen 3 abzusenken. Mit der Annäherung an die Bodenstellung, in welcher die Rückseite der Lehne 4 sich wenigstens näherungsweise in der Horizontalen befindet, legt sich die Lehne 4 auf das Sitzkissen 3. Die Sicherung dieser zusammengeklappten Bodenstellung erfolgt durch Verriegeln des Beschlags 10. Die Rückkehr in die zuvor eingenommene Gebrauchsstellung erfolgt nach dem Entriegeln des Beschlags 10 in umgekehrter Reihenfolge der beschriebenen Schritte.

Soweit vorstehend beschrieben entspricht der Aufbau im Wesentlichen der DE 10 2008 050 468 B3. Wie bereits vorstehend beschrieben, ist zum Überführen des Fahrzeugsitzes 1 in eine Einstiegsstellung der Griff 41 als Entriegelungsbetätigungsvorrichtung vorgesehen, über welchen eine Betätigung der beiden Schlösser 23 zwecks Entriegelung derselben erfolgt, wobei als kraftübertragendes Element jeweils ein Bowdenzug 43 zwischen der Entriegelungsbetätigungsvorrichtung und jedem der beiden Schlösser 23 vorgesehen ist.

Der Griff 41 ist mehrteilig ausgebildet, wobei er einen lehnenfesten Halter 41 a, einen im Halter 41 a um eine starre Schwenkachse verschwenkbaren Betätigungshebel 41 b mit einem Griffbereich 41b' und einem einstückig hiermit verbundenen Betätigungsarm 41b", und eine schlitzförmige Indikatoröffnung 41 c direkt benachbart des Betätigungshebels 41 b aufweist.

Benachbart des Halters 41 a ist ein Bowdenzughalter 45 angeordnet. Der Bowdenzughalter 45 weist zwei Hüllenabstützungen 45a für die Hüllen der Bowdenzüge 43, eine starre Achse 45b, welche durch zwei Öffnungen des Bowdenzughalters 45 gehalten ist, und zwei um die Achse 45b verschwenkbare Seelenendenhalter 45c auf.

Die schwenkbaren Seelenendenhalter 45c weisen jeweils einen kreisabschnittsförmigen Bereich mit einem an einem Ende vorstehenden Nocken 45c', welcher mit dem Betätigungsarm 41 b" des Griffs 41 zusammenwirkt, und eine am anderen Endbereich des kreisabschnittsförmigen Bereichs angeordneten Kontaktbereich 45c" auf, gebildet durch den diesseitigen Endbereich der Außenmantelfläche des kreisabschnittsförmigen Bereichs und einen gekrümmten Übergangsbereich, in welchem die Außenmantelfläche in einen im Wesentlichen in radialer Richtung verlaufenden Bereich übergeht. Der gesamte kreisabschnittsförmige Bereich des ersten Seelenendenhalters 45 samt Nocken 45c' und Kontaktbereich 45c", welcher dem ersten Bowdenzug 43 zugeordnet ist, bildet hierbei einen ersten Indikator 51. Der gesamte kreisabschnittsförmige Bereich des zweiten Seelenendenhalters 45 samt Nocken 45c' und Kontaktbereich 45c", welcher dem zweiten Bowdenzug 43 zugeordnet ist, bildet hierbei einen zweiten Indikator 52. Diese beiden Indikatoren 51 und 52 wirken über ihre Kontaktbereiche 45c" mit einem Gesamtindikator 61 zusammen, welcher im Bowdenzughalter 45 positioniert ist und von dem ein Anzeigearm 61a im Bereich der schlitzförmigen Indikatoröffnung 41c des Griffs 41 positioniert ist und über denselben hinausragen kann.

Der Gesamtindikator 61 weist vorliegend eine Gestalt auf, welche vorliegend im Wesentlichen durch zwei benachbarte, in einem Winkel von ca. 90° zueinander angeordnete, ebene Flächen (Außenfläche des Anzeigearms 61a und eines Verbindungsbereichs zwischen Anzeigearm 61 a und Betätigungsarm 61 b) und eine in einem Winkel größer 90° und zumindest teilweise in einem Radius gekrümmte Fläche (Außenfläche des Betätigungsarms 61 b) gebildet ist. Die Außenflächen des Anzeigearms 61 a und des Betätigungsarms 61 b sind keilstumpfartig angeordnet, d.h. in Gestalt eines Keils, dessen Spitze fehlt. Der Anzeigearm 61 a liegt flächig und nach oben und unten verschiebbar mit seiner Außenfläche an einer Führungsfläche 45d des Bowdenzughalters 45 an. Der auf der anderen Seite positionierte Betätigungsarm 61 b wirkt mit seiner Außenfläche mit den beiden Indikatoren 51, 52 im Kontaktbereich 45c" zusammen. Hierbei ist die Außenfläche des Betätigungsarms 61 b entsprechend der Krümmung der Außenflächen der Indikatoren 51, 52 ausgebildet und derart bemessen, dass, wenn die Indikatoren 51, 52 maximal angehoben sind, die Krümmung des Betätigungsarms 61 b konzentrisch bezüglich der Schwenkachse der Indikatoren 51, 52 ist.

Aufgrund der Ausgestaltung des Gesamtindikators 61 mit einer zumindest bereichsweise gekrümmten Außenfläche des Betätigungsarms 61 b können die Indikatoren 51, 52 - einzeln oder gemeinsam - bei einer Betätigung des entsprechenden Bowdenzugs 45 ab der Stellung, in welcher der Gesamtindikator 61 maximal ausgefahren ist, weiterschwenken, ohne dass der Gesamtindikator 61 weiterbewegt wird.

Der Gesamtindikator 61 wird mittels nicht in der Zeichnung dargestellter Federn zum einen nach unten, entgegen der Ausfahrrichtung gedrückt. Ferner spannen Federn die Indikatoren 51, 52 derart vor, dass sie den Gesamtindikator 61 in Ausfahrrichtung drücken, das Rückholen der Indikatoren 51, 52 erfolgt über die Bowdenzüge 43. Bei der Auslegung sind die Federkonstanten derart bemessen, dass ein sicheres Ausfahren des Gesamtindikators 61 gewährleistet ist, d.h. die Federkraft der den Gesamtindikator 61 nach unten in Einfahrrichtung drückenden Feder ist kleiner als die Kraft jeder der Federn, die die Indikatoren 51, 52 auslenken, um den Gesamtindikator 61 in Ausfahrrichtung zu bewegen. Aufgrund besagter gekrümmter Außenfläche des Betätigungsarms 61 b des Gesamtindikators 61 in Verbindung mit der entsprechend gekrümmten Außenfläche der Indikatoren 51, 52 im Kontaktbereich 45c" wird sichergestellt, dass die Bewegung des Gesamtindikators 61 begrenzt ist.

Im Folgenden wird die Funktion des Griffs 41 in Verbindung mit dem Gesamtindikator 61 näher erläutert.

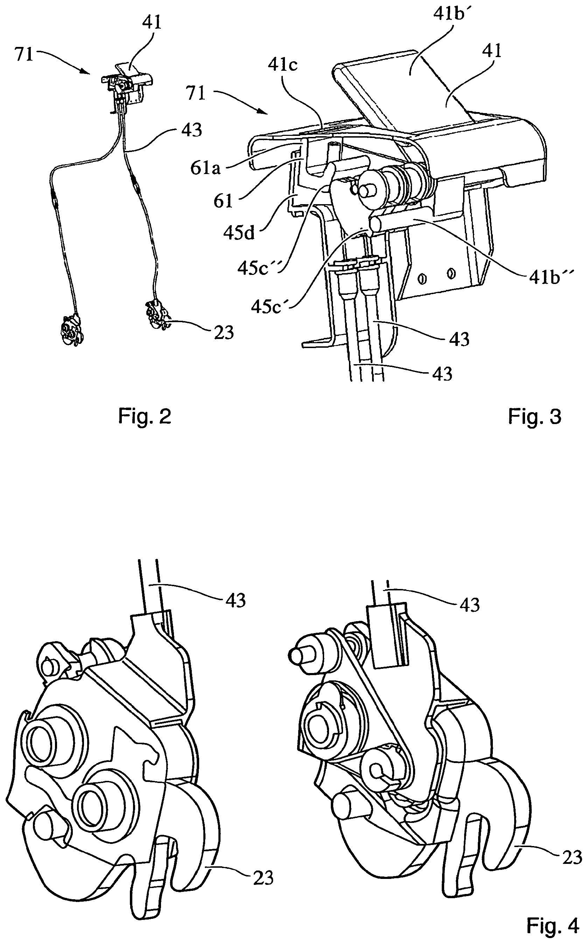

In der verriegelten Ausgangsstellung, dargestellt in den Figuren 2 und 3, sind die beiden Schlösser 23 mit den entsprechenden hinteren Füßen 21 verriegelt. Der Griffbereich 41 b' des Griffs 41 ist leicht aufgestellt, um ein einfaches Ergreifen des Griffbereichs 41 b' zu ermöglichen. Der Betätigungsarm 41 b" des Griffs 41 ist in Anlage an beide Indikatoren 51, 52 im Bereich der Nocken 45c'. Auf der anderen Seite der Indikatoren 51, 52 liegt jeweils der gekrümmte Übergangsbereich des Kontaktbereichs 45c" am Gesamtindikator 61 an, wobei der Gesamtindikator 61, heruntergedrückt durch die ihm zugeordnete, nicht dargestellte Feder, in seiner untersten Stellung angeordnet ist, so dass der Anzeigearm 61a in der schlitzförmigen Indikatoröffnung 41c endet, wie in Fig. 3 dargestellt.

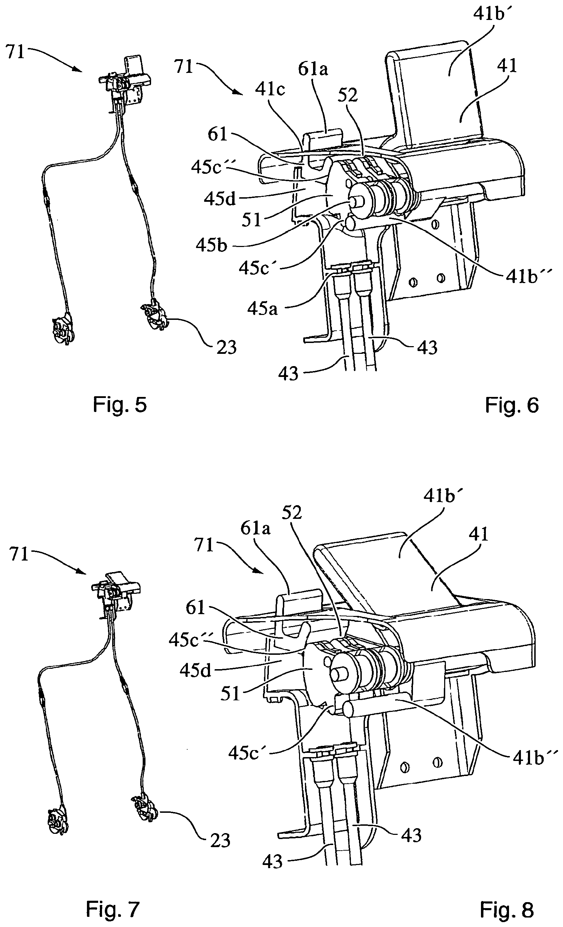

Bei einer Betätigung des Betätigungshebels 41, wie in den Figuren 4 und 4 dargestellt, erfolgt eine Betätigung der beiden Bowdenzüge 43, bis die beiden Schlösser 23 sich in der vollständig entriegelten Stellung befinden und jeweils den entsprechenden hinteren Fuß 21 freigeben. Durch das Ziehen am Betätigungshebel 41 b des Griffs 41 erfolgt eine Schwenkbewegung des Griffbereichs 41 b' samt Betätigungsarm 41 b". Hierbei nimmt der Betätigungsarm 41 b", der an den Nocken 45c' der Seelenendenhalter 45c anliegt, dieselben mit, so dass dieselben ebenfalls eine Schwenkbewegung durchführen, wobei die Schwenkbewegung des Betätigungshebels 41 b und die Schwenkbewegung der Seelenendenhalter 45c zumindest im Wesentlichen um die gleiche Schwenkachse erfolgen. Die Seelenendenhalter 45c nehmen die Seelenenden mit, so dass sich dieselben relativ zu den von den Hüllenabstützungen 45a gehaltenen Hüllen bewegen, wodurch eine Kraftübertragung an die Schlösser 23 erfolgt, so dass dieselben entriegeln. Gleichzeitig nehmen die Seelenendenhalter 45c in ihrer Funktion als Indikatoren 51, 52 den Gesamtindikator 61 entgegen der ihn herunterdrückenden Federkraft mit, welcher entlang der Führungsfläche 45d nach oben geschoben wird, so dass der Anzeigearm 61a durch die Indikatoröffnung 41 c nach oben ragt und für den Bediener sichtbar wird (siehe Fig. 6). Während der Verschiebebewegung des Gesamtindikators 61 verändert sich der Anlagepunkt innerhalb des Kontaktbereichs 45c" in Richtung Außenmantelfläche des kreisabschnittsförmigen Bereichs. Sobald zumindest einer der Indikatoren 51, 52 den Gesamtindikator 61 so weit hochgeschoben und damit ausgefahren hat, dass die gekrümmte Außenfläche des Betätigungsarms 61 b konzentrisch zur Schwenkachse der Indikatoren 51, 52 angeordnet ist, endet die Ausfahrbewegung des Gesamtindikators 61. D.h. der Gesamtindikator 61 fährt auch dann nicht weiter aus, wenn die Indikatoren 51, 52 sich weiter drehen.

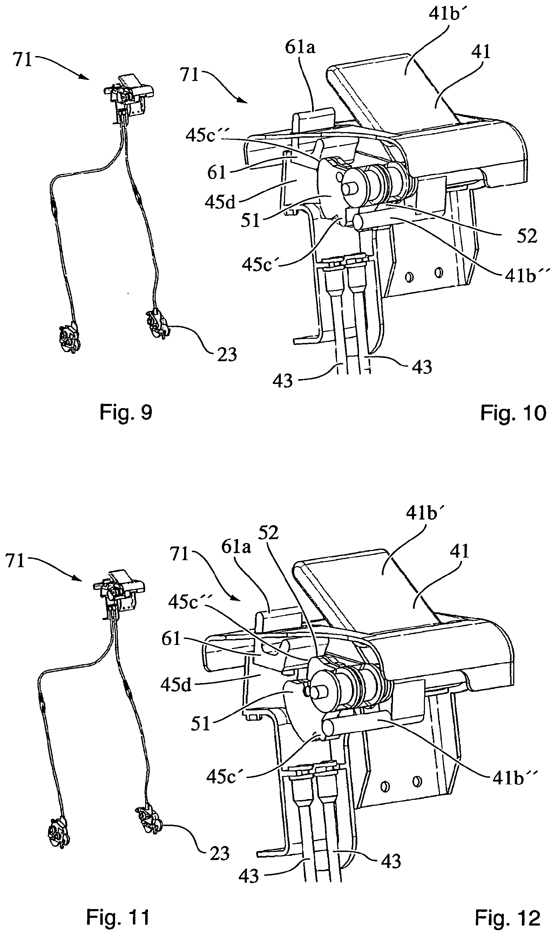

Während des Vorklappens des Fahrzeugsitzes 1 samt Lehne 4 in die Einstiegsstellung, welches in den Figuren 10 und 8 dargestellt ist, verbleiben die Schlösser 23 in ihrer entriegelten Stellung, d.h. auch der Gesamtindikator 61 zeigt diesen entriegelten Zustand dadurch an, dass der Anzeigearm 61 a weiterhin durch die Indikatoröffnung 41 c ragt. Dies wird dadurch sichergestellt, dass zwar der Betätigungshebel 41 b samt Betätigungsarm 41 b" aufgrund der Federkraft einer Rückstellfeder (in den Figuren nicht dargestellt) in die Ausgangslage zurückkehrt, die Bowdenzüge aber noch immer eine gewisse Relativverschiebung zwischen Seelenende und Hülle, bezogen auf den Ausgangszustand, aufweisen, so dass sich die Indikatoren 51, 52 nur leicht zurückbewegen und insbesondere noch nicht wieder in Anlage an den Betätigungsarm 41 b" gelangt sind. Dadurch liegen sie noch mit dem Kontaktbereich 45c" am Gesamtindikator 61 an und halten denselben in ausgefahrener Stellung.

Treten Probleme beim Verriegeln der Schlösser 23 auf, wie in den Figuren 9 bis 12 dargestellt, so erfolgt beim dem entsprechenden Schloss 23 zugeordneten Bowdenzug 43 kein vollständiges Rückstellen der Relativverschiebung von Seele und Hülle, so dass sich auch der entsprechende Indikator 51 (vgl. Fig. 9, 10) bzw. 52 (vgl. Fig. 11, 12) nicht zurückbewegt. Dadurch, dass im Falle einer nicht vollständigen Verriegelung eines der Schlösser 23 der entsprechende Indikator 51 bzw. 52 nicht wieder in Anlage an den Betätigungsarm 41 b" gelangt, sondern in einer in Bezug auf die Ausgangslage verschwenkten Stellung verbleibt, hält dieser Indikator 51 bzw. 52 den Gesamtindikator 61 - entgegen der Kraft der dem Gesamtindikator 61 zugeordneten, nicht dargestellten Feder - in ausgefahrener Stellung, so dass der Benutzer die Fehlfunktion einfach erkennen kann.

Der Gesamtindikator 61 bildet daher in Verbindung mit den beiden Indikatoren 51 und 52 eine Verriegelungsanzeige für den Fahrzeugsitz 1. Insgesamt wird eine Betätigungseinheit 71 für einen Fahrzeugsitz gemäß dem Ausführungsbeispiel durch den Griff 41 zur gemeinsamen Betätigung der beiden Schlösser 23, die Kraftübertragung zwischen Griff 41 und jedem der beiden Schlösser 23, die beiden Indikatoren 51, 52 und den Gesamtindikator 61 gebildet.

Obwohl vorstehend ein mit zwei Indikatoren zusammenwirkender Gesamtindikator beschreiben ist, kann der Gesamtindikator natürlich auch mit drei und mehr Indikatoren zusammenwirken, wobei er eine Fehlfunktion anzeigt, sobald nur ein einziger der Indikatoren eine Fehlfunktion anzeigt. Beispielsweise kann in Verbindung mit der Abfrage der Schlossverriegelungen auch eine Abfrage einer Sitzschienenverriegelung und/oder Beschlagsverriegelung erfolgen.

Ferner können anstelle der vorstehend beschriebenen Schlösser 23 zur Verriegelung der hinteren Füße 21 durch die Bowdenzüge 43 auch beliebige andere Verriegelungen entriegelt werden, wie beispielsweise die Sitzschienenverriegelung im Rahmen einer Längsverschiebung zum Einnehmen einer Einstiegsstellung (Easy-Entry-Stellung), so dass die Betätigungseinheit 71 in diesem Fall eine gelöste Sitzschienenverriegelung, insbesondere eine Fehlfunktion der Sitzschienenverriegelung, anzeigt.

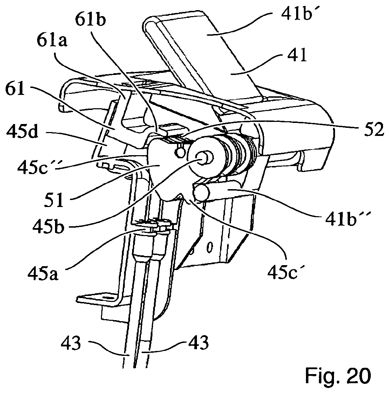

Gemäß einer in Fig. 20 dargestellten Abwandlung des Ausführungsbeispiels, bei der gleiche und gleichwirkende Elemente mit den gleichen Bezugszeichen wie beim Ausführungsbeispiel bezeichnet sind, unterscheidet sich die Betätigungseinheit 71 von der zuvor beschriebenen nur durch die Gestalt des Gesamtindikators 61. Dieser weist wiederum einen Anzeigearm 61 a, einen Betätigungsarm 61 b sowie einen dazwischen angeordneten Verbindungsbereich auf. Hierbei ist der Winkel zwischen der ebenen Außenfläche des Anzeigearms 61a und des Verbindungsbereichs vorliegend kleiner als 90°. Ferner ist der Betätigungsarm 61 b mit einer Krümmung ausgebildet, welche nicht konzentrisch zur Schwenkachse der Indikatoren 51, 52 ist, sondern eine Krümmung aufweist, welche zur Krümmung eines Endbereichs der Indikatoren 51, 52 passt, wobei das Ende des Betätigungsarms 61 b deutlich nach außen gezogen ist und sich nahezu parallel zum Verbindungsbereich erstrecken. Im Unterschied zum Ausführungsbeispiel ergibt sich durch diese Ausgestaltung des Endbereichs des Betätigungsarms 61 b eine Mitnahme des Gesamtindikators 61 durch die Indikatoren 51 und/oder 52 bis zu deren Bewegungsende und somit ist das Ausfahren des Gesamtindikators 61 abhängig von der Winkelstellung des am weitesten geschwenkten Indikators 51, 52, d.h. es erfolgt kein vorzeitiger Stopp, wenn die gekrümmte Fläche des Betätigungsarms 61 b des Gesamtindikators 61 des zuvor beschriebenen Ausführungsbeispiels konzentrisch zur Schwenkachse der Indikatoren 51, 52 positioniert ist.

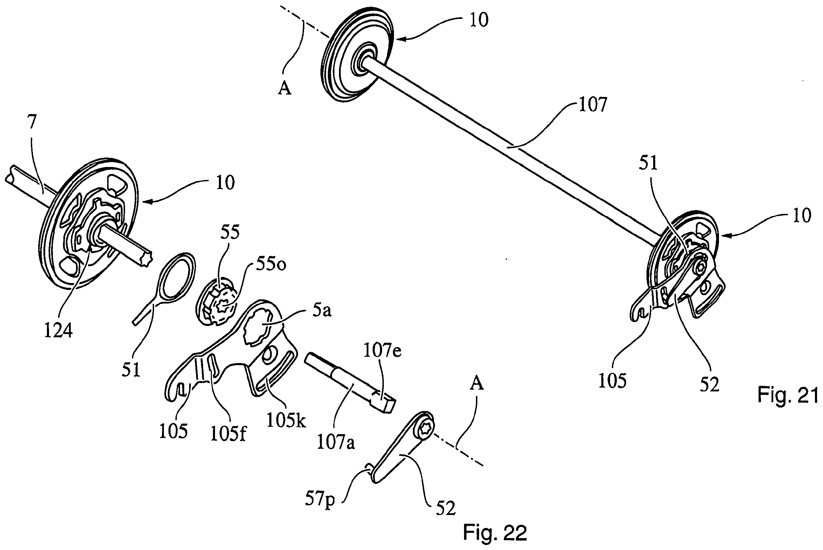

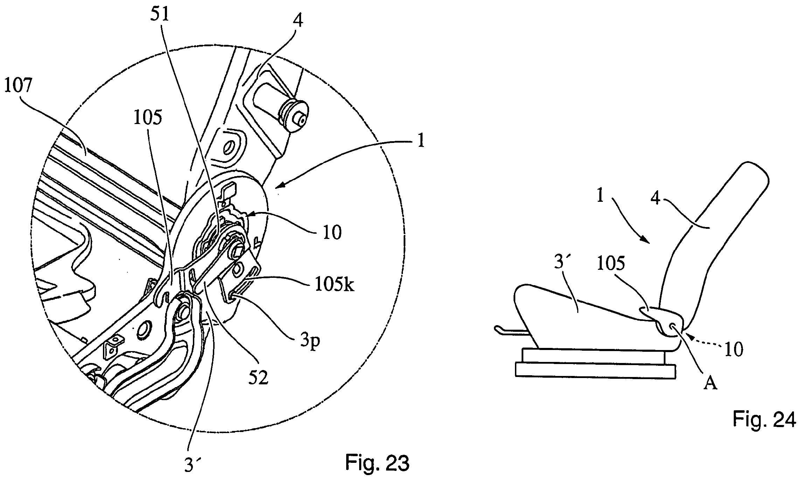

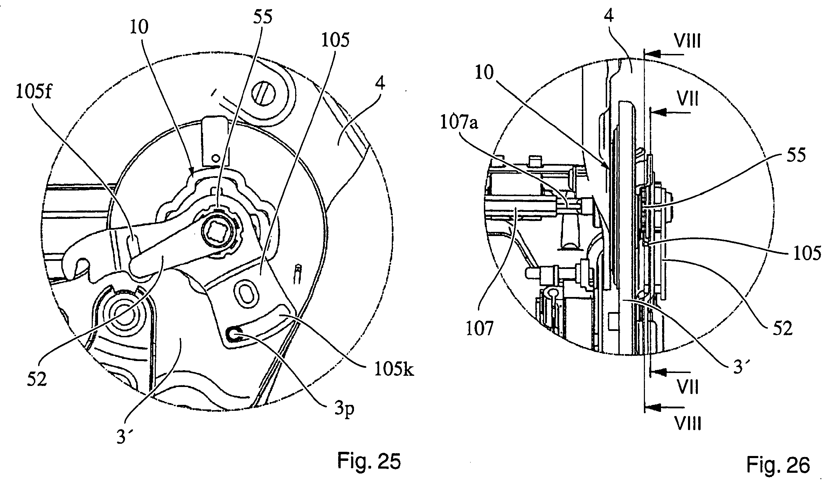

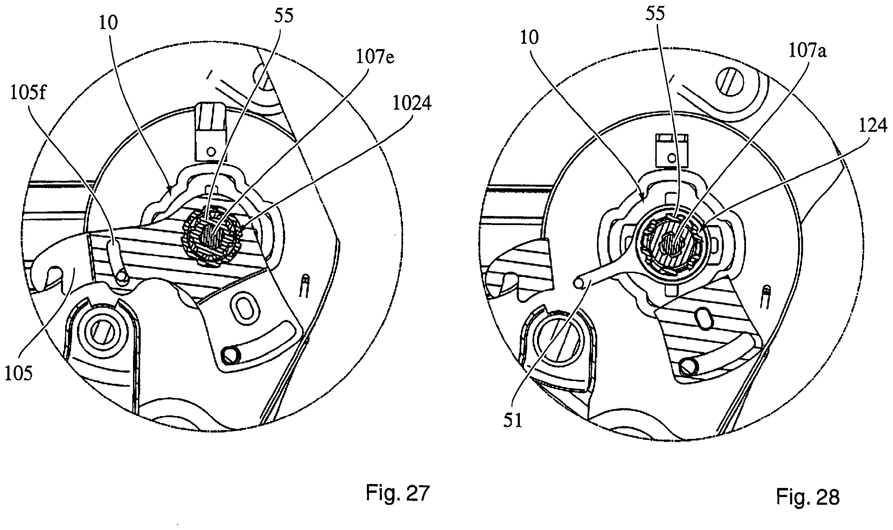

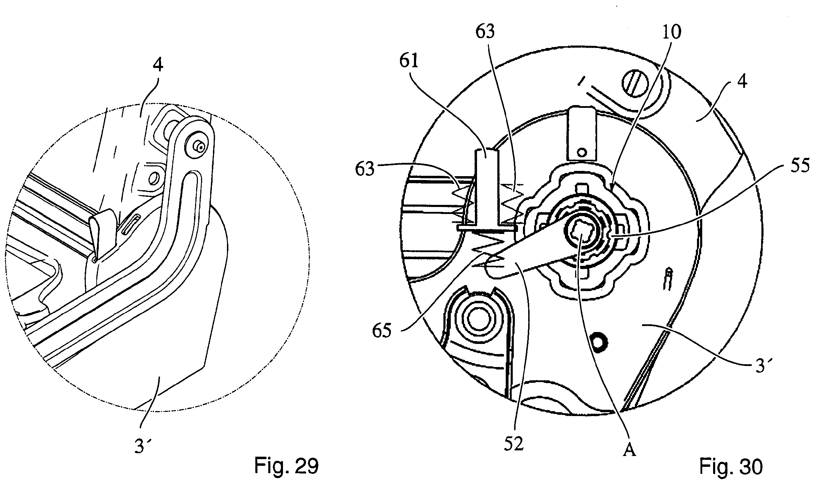

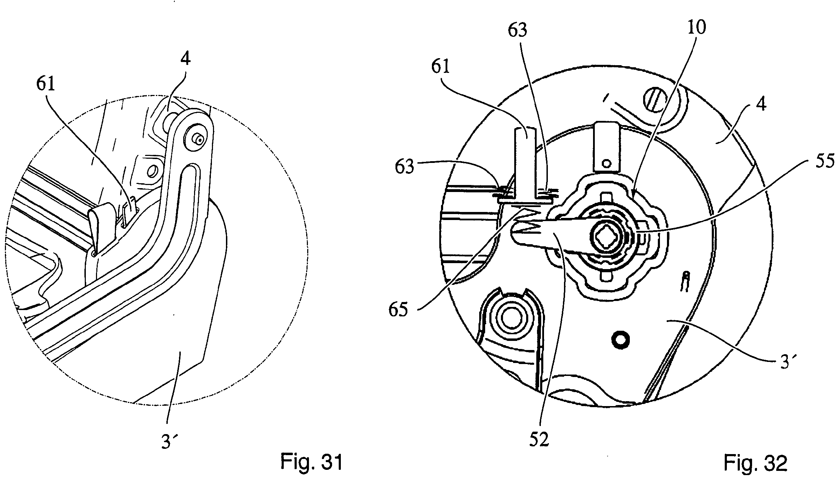

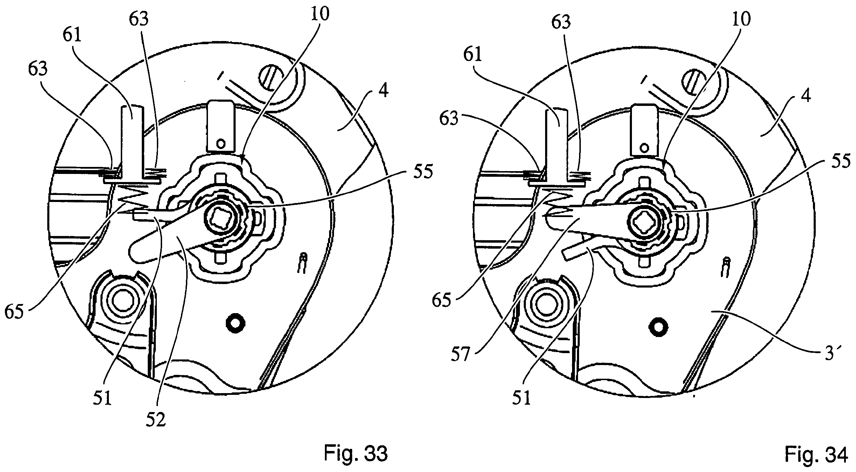

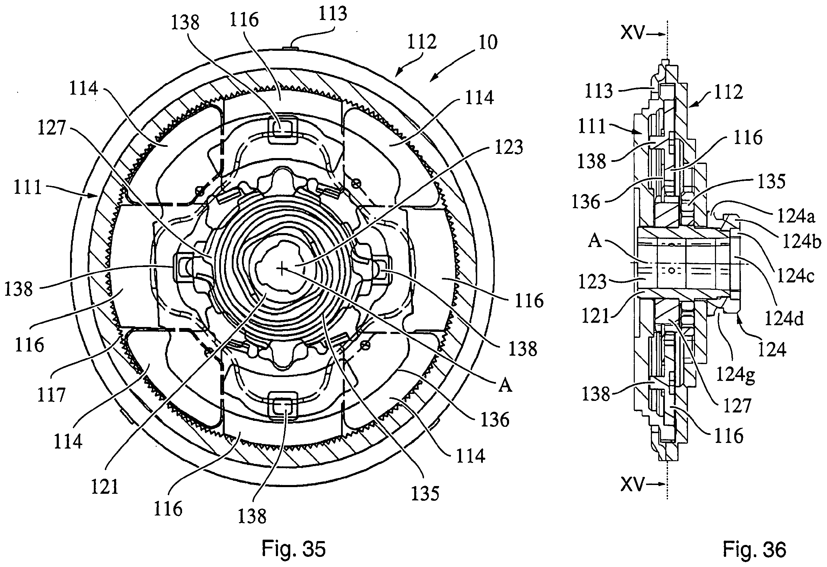

Nachfolgend wir eine zweite beispielhafte Ausführungsform der vorliegenden Erfindung anhand der Figuren 21 bis 36 illustriert:
Ein Fahrzeugsitz 1 für ein Kraftfahrzeug weist ein Sitzteil 3' und eine relativ zum Sitzteil 3' in ihrer Neigung einstellbare Lehne 4 auf. Zur Neigungseinstellung der Lehne 4 wird manuell, beispielsweise mittels eines Bedienhebels 105, eine Übertragungsstange 107 gedreht, welche horizontal im Übergangsbereich zwischen Sitzteil 3' und Lehne 4 angeordnet ist. Auf beiden Seiten des Fahrzeugsitzes 1 greift die Übertragungsstange 107 in einen Beschlag 10 ein.

Der Beschlag 10 weist ein erstes Beschlagteil 111 und ein zweites Beschlagteil 112 auf, welche relativ zueinander um eine Achse A verdrehbar sind. Die (gedachte) Achse A fluchtet vorliegend mit der Übertragungsstange 107 und definiert die verwendeten Richtungsangaben eines Zylinderkoordinatensystems. Die beiden Beschlagteile 111 und 112 lassen jeweils näherungsweise in eine kreisrunde Scheibenform einbeschreiben. Beide Beschlagteile 111 und 112 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 111 und 112, ist ein Umklammerungsring 113 vorgesehen. Der Umklammerungsring 113 besteht vorzugsweise aus Metall, insbesondere Stahl, der vorzugsweise ungehärtet ist. Der Umklammerungsring 113 weist vorzugsweise eine im wesentlichen flache Ringform auf, kann aber in alternativer Ausführung L-förmig profiliert mit einem Zylinderabschnitt und stirnseitig einem flachen Ringabschnitt sein.

Der Umklammerungsring 113 ist fest mit einem der beiden Beschlagteile 111 und 112 verbunden, vorliegend in einem äußeren Ringabschnitt mit dem zweiten Beschlagteil 112, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 113, gegebenenfalls unter Zwischenlage eines Gleitrings, das erste Beschlagteil 111 in dessen radial äußerem Randbereich, ohne die Relativbewegung der beiden Beschlagteile 111 und 112 zu behindern. Zudem werden die einander zugewandten Innenflächen der beiden Beschlagteile 111 und 112 vor dem Eindringen von Fremdkörpern und der Verschmutzung und Beschädigung geschützt.

Der Umklammerungsring 113 und das mit ihm fest verbundene Beschlagteil 111 oder 112 umklammern also das relativ zu ihnen bewegliche, andere der beiden Beschlagteile 111 und 112. In baulicher Hinsicht bilden die beiden Beschlagteile 111 und 112 daher zusammen (mit dem Umklammerungsring 113) eine scheibenförmige Einheit.

Mit der Montage des Beschlags 10 ist das erste Beschlagteil 111 beispielsweise fest mit der Struktur der Lehne 4 verbunden, also lehnenfest. Das zweite Beschlagteil 112 ist dann fest mit der Struktur des Sitzteils 3' verbunden, also sitzteilfest. Die Zuordnungen der Beschlagteile 111 und 112 können jedoch auch vertauscht sein, d.h. das erste Beschlagteil 111 wäre dann sitzteilfest und das zweite Beschlagteil 112 lehnenfest. Der Beschlag 10 liegt im Kraftfluss zwischen Lehne 4 und Sitzteil 3'.

Der Beschlag 10 ist als Rastbeschlag ausgebildet, bei welchem das erste Beschlagteil 111 und das zweite Beschlagteil 112 miteinander verriegelbar sind, wie es beispielsweise in der DE 10 2006 015 560 B3 beschrieben ist, deren diesbezüglicher Offenbarungsgehalt ausdrücklich einbezogen wird.

Das zweite Beschlagteil 112 weist - vorliegend vier - Führungssegmente 114 auf, welche mit geraden Führungsflächen paarweise jeweils einen Riegel 116 seitlich in radialer Richtung führen. Die - vorliegend insgesamt vier - Riegel 116 sind - vorliegend um je 90° - versetzt zueinander in einem zwischen den beiden Beschlagteilen 111 und 112 definierten Bauraum angeordnet. Die Riegel 116 sind an ihrem radial außen liegenden Ende mit einer Verzahnung versehen, die mit einem Zahnkranz 117 des als Hohlrad ausgebildeten ersten Beschlagteils 111 in Eingriff gelangen (einfallen) kann. Wenn der Zahnkranz 117 und die Riegel 116 zusammenwirken, ist der Beschlag 10 verriegelt.

Das erste Beschlagteil 111 ist in einer Vertiefung des zweiten Beschlagteils 112 angeordnet und wird durch dieses radial außen übergriffen, wodurch die beiden Beschlagteile 111 und 112 einander lagern. Dabei ist der radial äußere Randbereich des ersten Beschlagteils 111 mit dem Zahnkranz 117 in radialer Richtung zwischen den Führungssegmenten 114 und dem (der Lagerung des ersten Beschlagteils 111 dienenden) radial äußeren Randbereich des zweiten Beschlagteils 112 angeordnet. Bei hohen Belastungen, beispielsweise im Crashfall, kann das erste Beschlagteil 111 - nach einer Verformung - mit seinem Zahnkranz 117 in Anlage an die in Lastrichtung näher gelegenen Führungssegmente 114 kommen, welche in Richtung zum Zahnkranz 117 entsprechend (konzentrisch) gekrümmte Flächen aufweisen. Dies erhöht die Festigkeit des Beschlags 10.

Das erste Beschlagteil 111 kann im zweiten Beschlagteil 112 gelagert sein. Die Verhältnisse könnten aber genau umgekehrt sein, d.h. das zweite Beschlagteil 112 kann auf dem ersten Beschlagteil 111 gelagert sein. Grundsätzlich sind aber beide Anordnungen gleichwertig.

Im Zentrum des Beschlags 10 ist ein Mitnehmer 121 angeordnet, beispielsweise aus Kunststoff, welcher drehbar an wenigstens einem der beiden Beschlagteile 111 und 112, vorliegend dem ersten Beschlagteil 111, gelagert ist, genauer gesagt in einer zentralen Öffnung desselben. Auf einer ersten Fahrzeugsitzseite weist die Übertragungsstange 107 an ihrem Ende einen mit der Achse A fluchtenden Übertragungsbolzen 107a auf. Der Übertragungsbolzen 107a ist drehfest auf den profilierten Grundkörper der Übertragungsstange 107 aufgesteckt, in diesen hohlen Grundkörper eingesteckt oder an diesem Grundkörper befestigt oder einstückig mit dem Grundkörper ausgebildet. Der Übertragungsbolzen 107a ist mit einem kreiszylindrischen Abschnitt innerhalb einer - an sich profilierten - Bohrung 123 des hohlen Mitnehmers 121 relativ zu diesem drehbar angeordnet. Auf der anderen, zweiten Fahrzeugsitzseite ist der Mitnehmer 121 drehfest verbunden mit der Übertragungsstange 107, welche in die zentrale Bohrung 123 des hohlen Mitnehmer 121 eingeführt ist. An einem Ende des Mitnehmers 121, vorliegenden demjenigen am zweiten Beschlagteil 112, ist ein Befestigungsring 124 vorgesehen, welcher vorliegend aus Kunststoff besteht und vorzugsweise mittels Ultraschallschweißens am Mitnehmer 121 befestigt ist.

Auf dem Mitnehmer 121 sitzt drehfest ein Exzenter 127, welcher in dem zwischen den Beschlagteilen 111 und 112 definierten Bauraum angeordnet ist. Eine Federanordnung 135, beispielsweise eine oder zwei ineinander geschachtelte Spiralfedern, ist in einer zentralen Aufnahme eines der beiden Beschlagteile 111 und 112, vorliegend des zweiten Beschlagteils 112, angeordnet und vorliegend außen abgestützt. Die Federanordnung 135 beaufschlagt den Exzenter 127, vorliegend indem sie innen drehfest auf dem Mitnehmer 121 sitzt. Eine derartige Federanordnung 135 ist beispielsweise in der DE 10 2005 046 807 B3 beschrieben, deren diesbezüglicher Offenbarungsgehalt ausdrücklich einbezogen wird. Der von der Federanordnung 135 beaufschlagte Exzenter 127 wirkt auf die radial beweglichen Riegel 116 ein und beaufschlagt diese, so dass sie radial nach außen gedrückt werden, um in den Zahnkranz 117 einzufallen, womit der Beschlag 10 verriegelt ist.

Eine Steuerscheibe 136 ist im Bauraum axial zwischen den Riegeln 116 und dem ersten Beschlagteil 111 angeordnet und sitzt vorliegend drehfest auf dem Exzenter 127. Die Steuerscheibe 136 weist - vorliegend vier - Steuerbahnen auf, die jeweils mit einer Nase 138 jedes Riegels 116 zusammenwirken. Die Nasen 138 stehen dabei in axialer Richtung von den ihnen zugeordneten Riegeln 116 ab. Bei einer Drehung (um wenige Grad) des Mitnehmers 121 - und des damit angetriebenen Exzenters 127 und der Steuerscheibe 136 - entgegen der Kraft der Federanordnung 135 zieht die Steuerscheibe 136 die Riegel 116 radial nach innen, d.h. aus dem Zahnkranz 117, womit der Beschlag 10 entriegelt ist und die beiden Beschlagteile 111 und 112 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

Bei zweitürigen Kraftfahrzeugen soll mittels Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Bedienhebel 105 - oder ein weiteres Betätigungselement - nicht während des gesamten Freischwenkens gehalten werden muss und die Beschläge trotzdem erst in der freigeschwenkten Stellung verriegeln. Im Beschlag 10 ist hierfür zwischen der Steuerscheibe 136 und dem ersten Beschlagteil 111 um die Achse A herum optional ein ringförmiges Freischwenk-Steuerelement vorgesehen, wie es beispielsweise in der DE 10 2006 015 560 B3 beschrieben ist, deren diesbezüglicher Offenbarungsgehalt ausdrücklich einbezogen wird.

Die beiden Beschläge 10, die Übertragungsstange 107 und der Bedienhebel 105 sind Teile eines Beschlagsystems, zu welchem vorzugsweise noch eine nicht dargestellte Lehnenkompensationsfeder gehört, die an einem der beiden Beschläge 10 angeordnet ist. Die Übertragungsstange 107 ist zwischen dem Beschlag 10 auf der ersten Fahrzeugsitzseite und dem Beschlag 10 auf der zweiten Fahrzeugsitzseite angeordnet.

Auf beiden Fahrzeugsitzseiten weist der Befestigungsring 124 des jeweiligen Beschlags 10 mehrere, vorliegend vier, verschiedene Funktionsbereiche auf. Unmittelbar axial benachbart zum zweiten Beschlagteil 112 weist der Befestigungsring 124 ein Außenprofil 124a auf, vorliegend ein Vierkant mit abgerundeten Ecken, welches umlaufend auf einer radial abstehenden Materialpartie ausgebildet ist. An dem vom zweiten Beschlagteil 112 abgewandten, freien Ende weist der Befestigungsring 124 einen Bund 124b auf, welcher ebenfalls radial absteht. radial innerhalb des Bundes 124b ist ein Innenprofil 124c ausgebildet, beispielsweise eine umlaufende Wellenform oder ein Keilprofil. Radial innen ist der hohle Befestigungsring 124 mit einem Durchlass 124d versehen, in welchen der Mitnehmer 121 teilweise eingeführt werden kann. Vorliegend ist auf der ersten Fahrzeugsitzseite der vom Mitnehmer 121 umschlossene Übertragungsbolzen 107a drehbar durch den Durchlass 124d geführt, während auf der zweiten Fahrzeugsitzseite die vom Mitnehmer 121 umschlossene Übertragungsstange 107 eingeführt sein kann.

Das Außenprofil 124a ist auf der ersten Fahrzeugsitzseite zum drehfesten Zusammenwirken mit einem ersten Indikator 51 vorgesehen. Der erste Indikator 51 ist ein Ring mit einem radial abstehenden Zeiger, wobei der Ring ein zum Außenprofil 124a passendes, vorzugsweise formschlüssig zusammenwirkendes Profil aufweist. Der erste Indikator 51 gibt auf dieser ersten Fahrzeugsitzseite die Winkellage des Mitnehmers 121 und damit des Exzenters 127 an, welche wiederum ein Maß dafür ist, ob die vom Exzenter 127 beaufschlagten Riegel 116 radial außen oder radial innen sind, d.h. der Beschlag 10 verriegelt oder entriegelt ist.

Axial zwischen dem Außenprofil 124a und dem Bund 124b ist am Befestigungsring 124 eine Rille 124g ausgebildet, welche beispielsweise gegenüber dem Bund 124b 11 mm tief ist. Der Bund 124b ist für eine Clipsverbindung mit einem aufzuclipsenden Bauteil vorgesehen. Aufgrund der Rille 124g kann der Bund 124b in axialer Richtung hintergriffen werden, um die Clipsverbindung zu schaffen. Das aufzuclipsende Bauteil, welches einen oder mehrere hakenförmige Vorsprünge zum Zusammenwirken mit dem Bund 124b aufweist, ist vorliegend ein Adapter 55. Der ringförmige Adapter 55 ist vorzugsweise aus Kunststoff ausgebildet.

Das Innenprofil 124c ist für eine drehfeste Verbindung - oder bedarfsweise Kopplung auf Mitnahme - mit einem den Mitnehmer 121 beaufschlagenden Teil vorgesehen, vorliegend dem besagten Adapter 55. Der Adapter 55 weist ein zum Innenprofil 124c passendes, nach einem gewissen Freigang vorzugsweise formschlüssig zusammenwirkendes Profil an einem Lagerabschnitt auf. Der Adapter 55 ist dadurch mittels des Lagerabschnitts am Befestigungsring 124 gelagert, mit dem Mitnehmer 121 - mit einem Freigang - auf Mitnahme gekoppelt und mittels der Clipsverbindung mit dem Bund 124b axial gesichert.

Der Adapter 55 ist auch mit dem Übertragungsbolzen 107a auf Mitnahme gekoppelt. Hierzu weist der Übertragungsbolzen 107a an den kreiszylindrischen Abschnitt anschließend einen profilierten Endabschnitt 107e auf, welcher in eine zentrale Öffnung 55o des Adapters 55 gesteckt ist. Der Adapter 55 weist ein zum profilierten Endabschnitt 107e passendes, nach einem gewissen Freigang vorzugsweise formschlüssig zusammenwirkendes Innenprofil an der Wand dieser zentralen Öffnung 55o auf. Schließlich ist der Adapter 55 drehfest mit dem Bedienhebel 105 verbunden. Hierzu weist der (vorzugsweise metallische) Bedienhebel 105 eine profilierte Aufnahme 105a auf, welche den Adapter 55 formschlüssig aufnimmt. Der ringförmige Adapter 55 ist auf seiner Außenseite passend zur Aufnahme 105a profiliert. Alternativ sind der Bedienhebel 105 und der Adapter 55 einstückig miteinander ausgebildet. Für den Missbrauchsfall weist der Bedienhebel 105 eine Kulisse 105k auf, in welche ein sitzteilfester Stift 13p greift, wodurch der Auslenkwinkel des Bedienhebels 105 begrenzt ist.

Der erste Indikator 51 ist axial zwischen einerseits dem zweiten Beschlagteil 112 und andererseits dem Adapter 55 und dem Bedienhebel 105 angeordnet. Auf der vom ersten Indikator 51 abgewandten Seite des Bedienhebels 105 ist ein zweiter Indikator 52 angeordnet, welcher drehfest auf dem Endabschnitt 107e des Übertragungsbolzens 107a sitzt. Der zweite Indikator 52 weist einen radial abstehenden Zeiger auf, von dem - parallel zum Übertragungsbolzen 107a - ein Zapfen absteht, der durch ein Fenster 105f im Bedienhebel 105 ragt und in unmittelbarer Nachbarschaft des ersten Indikators 51 endet. Das Fenster 105f ist vorliegend so groß gewählt, dass keine direkte Kopplung des zweiten Indikators 52 an den Bedienhebel 105 besteht. Alternativ kann das Fenster 105f so ausgelegt sein, dass eine Kopplung auf Mitnahme erfolgt, welcher alternativ oder kummulativ zu der Kopplung zwischen Adapter 55 und Endabschnitt 107e des Übertragungsbolzens 107a besteht.

Die Winkellage der Zeiger der beiden Indikatoren 51 und 52 zeigt den Verriegelungszustand des jeweiligen Beschlags 10. In der Ausgangsstellung befindet sich jeder der beiden Beschläge 10 im verriegelten Zustand, d.h. sie sind jeweils und unabhängig voneinander verriegelt. Beide Indikatoren 51 und 52 sind so eingebaut, dass ihre Zeiger beide in die gleiche Richtung weisen. Ein stiftartiger Gesamtindikator 61 ist am Sitzteil 3' axial verschieblich gelagert und gegenüber diesem mittels wenigstens einer Indikatorfeder 63 so vorgespannt, dass er in der Ausgangsstellung durch eine Blende verdeckt wird, und dass er mittelbar gegen die Zeiger der beiden Indikatoren 51 und 52 (bei letzterem gegen den Zapfen 57p am Zeiger) gedrückt wird. Die beiden Indikatoren 51 und 52 können den Gesamtindikator 61 mit einer logischen OR-Funktion ansteuern, um einen entriegelten Zustand wenigstens eines der beiden Beschläge 10 anzuzeigen. Der Gesamtindikator 61 liegt nicht unmittelbar an den Zeigern der beiden Indikatoren 51 und 52 an, sondern mittels einer Kopplungsfeder 65, die diesbezüglich mit dem Gesamtindikator 61 in Serie angeordnet ist.

Wird der Bedienhebel 105 - und damit der drehfest mit ihm verbundene Adapter 55 - aus der Ausgangsstellung ausgelenkt, so nimmt der Adapter 55 - nach Durchfahren des jeweiligen Freigangs - einerseits den Befestigungsring 124 am Mitnehmer 121 auf der ersten Fahrzeugsitzseite und andererseits den Übertragungsbolzen 107a der Übertragungsstange 107 mit, wobei letztere drehfest mit dem Mitnehmer 121 auf der zweiten Fahrzeugsitzseite verbunden ist. Dadurch wird auf beiden Fahrzeugsitzseiten der jeweilige Beschlag 10 entriegelt, so dass die Lehne 4 geschwenkt werden kann. Mit der Drehung des Befestigungsrings 124 (auf der ersten Fahrzeugsitzseite) wird der erste Indikator 51 gedreht, und mit der Drehung des Übertragungsbolzens 107a wird der zweite Indikator 52 gedreht. Die beiden Indikator 51 und 52 wirken mittels der Kopplungsfeder 65 parallel zueinander auf den Gesamtindikator 61, welcher dadurch - entgegen der Vorspannung der Indikatorfeder 63 - ausfährt und - im entriegelten Zustand jedes der beiden Beschläge 10 - über die Blende übersteht, so dass der Gesamtindikator 61 sichtbar wird. Der Gesamtindikator 61 ist daher in einer Signalfarbe, vorzugsweise rot, gehalten, wenigstens in dem sichtbaren Bereich.

Wird der ausgelenkte Bedienhebel 105 losgelassen, so versuchen in den beiden Beschlägen 10 die enthaltenen Federanordnungen 135 den Exzenter 127 samt Mitnehmer 121 zurückzudrehen, um damit die Riegel 116 zu beaufschlagen, damit der zugeordnete Beschlag 10 in den verriegelten Zustand gelangt. Auf der ersten Fahrzeugsitzseite dreht der Mitnehmer 121 seinen Befestigungsring 124 und damit den ersten Indikator 51 zurück, während auf der zweiten Fahrzeugsitzseite der Mitnehmer 121 die Übertragungsstange 107 mit samt dem Übertragungsbolzen 107a dreht und damit den zweiten Indikator 52. Zudem dreht der besagte Befestigungsring 124 oder der Übertragungsbolzen 107a oder beide nach dem jeweiligen Freigang den Adapter 55, wodurch der ausgelenkte Bedienhebel 105 in die Ausgangsstellung zurückkehrt. Wenn beide Indikatoren 51 und 52 zurückdrehen, also den verriegelten Zustand des jeweiligen Beschlags 10 anzeigen, fährt auch der Gesamtindikator 61 (aufgrund der Vorspannung der ihn beaufschlagenden Indikatorfeder 63) ein. Kann jedoch nur einer der beiden Beschläge 10 (oder gar keiner) verriegeln, beispielsweise weil die Riegel 116 und der Zahnkranz 117 zufällig "Zahn auf Zahn" stehen, so dreht nur derjenige Indikator 51 oder 52 zurück, welcher dem in den verriegelten Zustand gelangten Beschlag 10 zugeordnet ist. Der andere Indikator 52 oder 51, welcher dem noch im entriegelten Zustand befindlichen Beschlag 10 zugeordnet ist, bleibt gedreht, so dass der Gesamtindikator 61 ausgefahren bleibt. Der Benutzer erkennt dadurch, dass die Ausgangsstellung noch nicht erreicht ist, d.h. wenigstens einer der beiden Beschläge 10 noch nicht im verriegelten Zustand ist, und für ein korrektes Verriegeln noch Handlungsbedarf besteht. Eine Stellung "Zahn auf Zahn" lässt sich durch eine minimale Schwenkbewegung (ca. 1°) der Lehne 4 auflösen.

### BEZUGSZEICHENLISTE

- 1: Fahrzeugsitz
- 3: Sitzkissen
- 3': Sitzteil
- 3a: Sitzkissenträger
- 3b: Arm
- 3p: sitzteilfester Stift
- 4: Lehne
- 10: Beschlag
- 9: Basis
- 9a: erste Sitzschiene
- 9b: zweite Sitzschiene
- 11: erster Fuß
- 13: Schwinge
- 21: hinterer Fuß
- 23: Schloss, Verriegelung
- 26: Hinterfuß-Viergelenk
- 27: erster Lenker
- 29: zweiter Lenker
- 33: Lehnenschwenkachse
- 35: Gelenk
- 36: Kissen-Viergelenk
- 41: Griff
- 41 a: Halter
- 41 b: Betätigungshebel
- 41 b': Griffbereich
- 41 b": Betätigungsarm
- 41c: Indikatoröffnung
- 43: Bowdenzug
- 45: Bowdenzughalter
- 45a: Hüllenabstützung
- 45b: Achse
- 45c: Seelenendenhalter
- 45c': Nocken
- 45c": Kontaktbereich
- 45d: Führungsfläche
- 51: erster Indikator
- 52: zweiter Indikator
- 55: Adapter
- 55o: zentrale Öffnung
- 57p: Zapfen
- 61: Gesamtindikator
- 61 a: Anzeigearm
- 61 b: Betätigungsarm
- 63: Indikatorfeder
- 65: Koppelfeder
- 71: Betätigungseinheit
- 105: Bedienhebel
- 105a: Aufnahme
- 105f: Fenster
- 105k: Kulisse
- 107: Übertragungsstange
- 107a: Übertragungsbolzen
- 107e: Endabschnitt
- 111: erstes Beschlagteil
- 112: zweites Beschlagteil
- 113: Umklammerungsring
- 114: Führungssegment
- 116: Riegel
- 117: Zahnkranz
- 121: Mitnehmer
- 123: Bohrung
- 124: Befestigungsring
- 124a: Außenprofil
- 124b: Bund
- 124c: Innenprofil
- 124d: Durchlass
- 124g: Rille
- 127: Exzenter
- 135: Federanordnung
- 136: Steuerscheibe
- 138: Nase
- A: Achse

## Patentansprüche

1. Betätigungseinheit (71) für einen Fahrzeugsitz (1), aufweisend einen Griff (41) zur gemeinsamen Betätigung zweier Verriegelungen (23), eine Kraftübertragung zwischen Griff (41) und jeder Verriegelung (23), einen ersten Indikator (51), welcher der ersten Kraftübertragung zugeordnet ist, einen zweiter Indikator (52), welcher der zweiten Kraftübertragung zugeordnet ist, wobei die beiden Indikatoren (51, 52) jeweils den Verriegelungszustand der zugeordneten Verriegelung (23) anzeigen, und die beiden Indikatoren (51, 52) mit einer logischen OR-Funktion einen Gesamtindikator (61) ansteuern, um sichtbar den entriegelten Zustand anzuzeigen.

2. Betätigungseinheit nach Anspruch 1, **dadurch gekennzeichnet, dass** das Betätigungselement einen Griff (41) umfasst und/oder dass die Kraftübertragung zwischen Griff (41) und Verriegelung (23) zumindest in einem Teilbereich durch Bowdenzüge (43) gebildet ist.

3. Betätigungseinheit nach Anspruch 2, **dadurch gekennzeichnet, dass** die Indikatoren (51,52)
-- bezüglich einer Achse drehbar sind und in Verbindung mit Seelen der Bowdenzüge (43) stehen,
-- eine Schwenkbewegung und der Gesamtindikator (61) eine Linearbewegung durchführen und/oder
-- um die gleiche Schwenkachse verschwenkbar sind, wie ein Betätigungshebel (41 b) des Griffs (41).

4. Betätigungseinheit nach einem der vorhergehenden Ansprüche, **dadurch gekennzeichnet, dass** die beiden Indikatoren (51, 52) oder Teile derselben räumlich benachbart angeordnet sind und beide auf den Gesamtindikator (61) einwirken.

5. Betätigungseinheit nach einem der vorhergehenden Ansprüche, **dadurch gekennzeichnet, dass** den Indikatoren (51, 52) von einer ersten Richtung durch den Griff (41) eine Kraft auferlegbar ist und von einer zweiten, sich von der ersten Richtung unterscheidenden Richtung, von der Kraftübertragung eine entgegenwirkende Kraft auferlegbar ist.

6. Betätigungseinheit nach Anspruch 5, **dadurch gekennzeichnet, dass** der Gesamtindikator (61) in einem Bereich mit den Indikatoren (51, 52) zusammenwirkt, in welchem die Kraftübertragung auf die Indikatoren (51, 52) einwirkt.

7. Betätigungseinheit nach Anspruch 3, **dadurch gekennzeichnet, dass** der Griff (41) einen einzigen Betätigungsarm (41 b") aufweist, der mit den Indikatoren (51, 52) zusammenwirkt.

8. Fahrzeugsitz (1) mit einem Sitzteil (3) und einer Lehne (5), welcher in eine Bodenstellung und/oder Einstiegsstellung überführbar ist, **gekennzeichnet durch** eine Betätigungseinheit (71) nach einem der vorhergehenden Ansprüche.

9. Beschlagsystem für einen Fahrzeugsitz, insbesondere einen Kraftfahrzeugsitz, mit je einem Beschlag (10) auf einer ersten Fahrzeugsitzseite und auf einer zweiten Fahrzeugsitzseite, welche in einem verriegelten Zustand unabhängig voneinander jeweils verriegelt sind, und einem Bedienhebel (105), dessen Betätigung die beiden Beschläge (10) vom verriegelten Zustand in den entriegelten Zustand bringt, **dadurch gekennzeichnet, dass** dem Beschlag (10) auf der ersten Fahrzeugsitzseite ein erster Indikator (51) und dem Beschlag (10) auf der zweiten Fahrzeugsitzseite ein zweiter Indikator (52) zugeordnet ist, wobei die beiden Indikatoren (51, 52) jeweils den Verriegelungszustand des zugeordneten Beschlags (10) anzeigen, und die beiden Indikatoren (51, 52) mit einer logischen OR-Funktion einen Gesamtindikator (61) ansteuern, um sichtbar den entriegelten Zustand wenigstens eines der beiden Beschläge (10) anzuzeigen.

10. Beschlagsystem nach Anspruch 9, **dadurch gekennzeichnet, dass** die Indikatoren (51, 52) bezüglich einer Achse (A) drehbar sind und radial abstehende Zeiger aufweisen, deren jeweilige Winkelstellung den Verriegelungszustand des zugeordneten Beschlags (10) anzeigt.

11. Beschlagsystem nach einem der Ansprüche 9 oder 10, **dadurch gekennzeichnet, dass** die beiden Indikatoren (51, 52) oder Teile derselben räumlich benachbart angeordnet sind und beide auf den Gesamtindikator (61) einwirken, insbesondere mittels einer Koppelfeder (65).

12. Beschlagsystem nach einem der Ansprüche 9 bis 12, **dadurch gekennzeichnet, dass** die beiden Beschläge (10) jeweils ein erstes Beschlagteil (111) und ein zweites Beschlagteil (112) aufweisen, die im verriegelten Zustand des jeweiligen Beschlags (10) miteinander verriegelt, mittels Drehung eines Mitnehmers (121) entriegelbar und im entriegelten Zustand des jeweiligen Beschlags (10) relativ zueinander um eine Achse (A) verdrehbar sind, und dass eine Übertragungsstange (107) parallel zur Achse (A) zwischen den beiden Beschlägen (10) auf den beiden Fahrzeugsitzseiten angeordnet ist.

13. Beschlagsystem nach Anspruch 12, **dadurch gekennzeichnet,**
-- **dass** der erste Indikator (51) drehfest mit dem Mitnehmer (121) des Beschlags (10) auf der ersten Fahrzeugsitzseite verbunden ist,
-- **dass** die Übertragungsstange (107) drehfest mit dem Mitnehmer (121) des Beschlags (10) auf der zweiten Fahrzeugsitzseite verbunden ist,
-- **dass** der zweite Indikator (52) drehfest mit der Übertragungsstange (107), insbesondere einem Übertragungsbolzen (107a) derselben, verbunden ist und/oder
-- **dass** ein Adapter (55) vorgesehen ist, welcher einerseits mit einem Freigang mit einem der Mitnehmer (121) auf Mitnahme gekoppelt und andererseits mit einem Freigang mit der Übertragungsstange (107), insbesondere einem Übertragungsbolzen (107a) derselben, auf Mitnahme gekoppelt ist.

14. Beschlagsystem nach Anspruch 13, **dadurch gekennzeichnet, dass** der Bedienhebel (105) mit dem Adapter (55) drehfest verbunden oder einstückig ausgebildet ist.

15. Fahrzeugsitz (1) mit einem Sitzteil (3') und einer Lehne (4), welche mittels eines Beschlagsystems nach einem der Ansprüche 9 bis 14 am Sitzteil (3') angebracht, relativ zu diesem schwenkbar und mit unterschiedlichen Neigungseinstellungen verriegelbar ist.

## Claims

1. Actuation unit (71) for a vehicle seat (1), having a handle (41) for the common actuation of two locking systems (23), a force transmission between the handle (41) and each locking system (23), a first indicator (51) which is associated with the first force transmission, a second indicator (52) which is associated with the second force transmission, wherein the two indicators (51, 52) each indicate the locking state of the associated locking system (23), and the two indicators (51, 52) control a general indicator (61) with a logical OR function in order to display the unlocked state in a visible manner.

2. Actuation unit according to Claim 1, **characterized in that** the actuation element comprises a handle (41) and/or **in that** the force transmission is formed by Bowden cables (43) between the handle (41) and the locking system (23) at least in a partial region.

3. Actuation unit according to Claim 2, **characterized in that** the indicators (51, 52)
-- are rotatable relative to an axis and are connected to cores of the Bowden cables (43),
-- carry out a pivot movement and the general indicator (61) carries out a linear movement and/or
-- can be pivoted about the same pivot axis as an actuation lever (41b) of the handle (41).

4. Actuation unit according to one of the preceding claims, **characterized in that** the two indicators (51, 52) or portions thereof are arranged spatially beside each other and both act on the general indicator (61).

5. Actuation unit according to one of the preceding claims, **characterized in that** a force can be applied to the indicators (51, 52) from a first direction by the handle (41) and an opposing force can be applied by the force transmission from a second direction different from the first direction.

6. Actuation unit according to Claim 5, **characterized in that** the general indicator (61) cooperates with the indicators (51, 52) in a region in which the force transmission acts on the indicators (51, 52).

7. Actuation unit according to Claim 3, **characterized in that** the handle (41) has a single actuation arm (41b") which cooperates with the indicators (51, 52).

8. Vehicle seat (1) which has a seat member (3) and a backrest (5) and which can be moved into a flat floor position and/or entry position, **characterized by** an actuation unit (71) according to one of the preceding claims.

9. Fitting system for a vehicle seat, in particular a motor vehicle seat, having a fitting (10) at a first vehicle seat side and at a second vehicle seat side, which fittings are locked in a locked state independently of each other, and having an operating lever (105) whose actuation moves the two fittings (10) from the locked state into the unlocked state, **characterized in that** a first indicator (51) is associated with the fitting (10) at the first vehicle seat side and a second indicator (52) is associated with the fitting (10) at the second vehicle seat side, wherein the two indicators (51, 52) each indicate the locking state of the associated fitting (10), and the two indicators (51, 52) control a general indicator (61) with a logical OR function in order to display the unlocked state of at least one of the two fittings (10) in a visible manner.

10. Fitting system according to Claim 9, **characterized in that** the indicators (51, 52) can be rotated relative to an axis (A) and have radially protruding indicator members whose angular position indicates the locking state of the associated fitting (10).

11. Fitting system according to either Claim 9 or Claim 10, **characterized in that** the two indicators (51, 52) or portions thereof are arranged spatially beside each other and both act on the general indicator (61), in particular by means of a coupling spring (65).

12. Fitting system according to one of Claims 9 to 12, **characterized in that** the two fittings (10) each have a first fitting member (111) and a second fitting member (112) which are locked with each other in the locked state of the fitting (10), can be unlocked by a carrier (121) being rotated and can be rotated relative to each other about an axis (A) in the unlocked state of the fitting (10), and **in that** a transmission rod (107) is arranged parallel with the axis (A) between the two fittings (10) at the two vehicle seat sides.

13. Fitting system according to Claim 12, **characterized**
-- **in that** the first indicator (51) is connected in a rotationally secure manner to the carrier (121) of the fitting (10) at the first vehicle seat side,
-- **in that** the transmission rod (107) is connected in a rotationally secure manner to the carrier (121) of the fitting (10) at the second vehicle seat side,
-- **in that** the second indicator (52) is connected in a rotationally secure manner to the transmission rod (107), in particular a transmission bolt (107a) thereof, and/or
-- **in that** there is provided an adapter (55) which is connected, on the one hand, with a clearance to one of the carriers (121) for entrainment and, on the other hand, with a clearance to the transmission rod (107), in particular a transmission bolt (107a) thereof, for entrainment.

14. Fitting system according to Claim 13, **characterized in that** the operating lever (105) is connected in a rotationally secure manner to the adapter (55) or is constructed integrally.

15. Vehicle seat (1) having a seat member (3') and a backrest (4) which is fitted to the seat member (3') by means of a fitting system according to one of Claims 9 to 14, can be pivoted relative thereto and can be locked with different inclination adjustments.

## Revendications

1. Unité d'actionnement (71) pour un siège de véhicule (1), comprenant une poignée (41) destinée à l'actionnement en commun de deux éléments de verrouillage (23), une transmission de force entre la poignée (41) et chaque élément de verrouillage (23), un premier indicateur (51) qui est associé à la première transmission de force, un deuxième indicateur (52) qui est associé à la deuxième transmission de force, les deux indicateurs (51, 52) indiquant respectivement l'état de verrouillage de l'élément de verrouillage (23) associé, et les deux indicateurs (51, 52) commandant un indicateur global (61) avec une fonction logique OU afin d'indiquer l'état verrouillé de manière visible.

2. Unité d'actionnement selon la revendication 1, **caractérisée en ce que** l'élément d'actionnement comprend une poignée (41) et/ou **en ce que** la transmission de force entre la poignée (41) et l'élément de verrouillage (23) est formée par des câbles de commande (43) au moins dans une zone partielle.

3. Unité d'actionnement selon la revendication 2, **caractérisée en ce que** les indicateurs (51, 52)
- peuvent tourner par rapport à un axe et sont en liaison avec les âmes des câbles de commande (43),
- effectuent un mouvement de pivotement et l'indicateur global (61) un mouvement linéaire et/ou
- peuvent pivoter autour du même axe de pivotement qu'un levier d'actionnement (41b) de la poignée (41).

4. Unité d'actionnement selon l'une des revendications précédentes, **caractérisée en ce que** les deux indicateurs (51, 52) ou des parties de ceux-ci sont disposés adjacents dans l'espace et les deux agissent sur l'indicateur global (61).

5. Unité d'actionnement selon l'une des revendications précédentes, **caractérisée en ce qu'**une force peut être appliquée aux indicateurs (51, 52) par la poignée (41) depuis une première direction et une force agissant en sens inverse peut être appliquée par la transmission de force depuis une deuxième direction différente de la première direction.

6. Unité d'actionnement selon la revendication 5, **caractérisée en ce que** l'indicateur global (61) coopère avec les indicateurs (51, 52) dans une zone dans laquelle la transmission de force agit sur les indicateurs (51, 52).

7. Unité d'actionnement selon la revendication 3, **caractérisée en ce que** la poignée (41) possède un unique bras d'actionnement (41b") qui coopère avec les indicateurs (51, 52).

8. Siège de véhicule (1) comprenant une partie d'assise (3) et un dossier (5), lequel peut être transféré dans une position au sol et/ou une position d'embarquement, **caractérisé par** une unité d'actionnement (71) selon l'une des revendications précédentes.

9. Système de ferrure pour un siège de véhicule, notamment un siège de véhicule automobile, comprenant une ferrure (10) respectivement sur un premier côté de siège de véhicule et sur un deuxième côté de siège de véhicule, lesquelles sont respectivement verrouillées indépendamment l'une de l'autre dans un état verrouillé, et un levier de commande (105) dont l'actionnement amène les deux ferrures (10) de l'état verrouillé à l'état déverrouillé, **caractérisé en ce qu'**un premier indicateur (51) est associé à la ferrure (10) sur le premier côté de siège de véhicule et un deuxième indicateur (52) à la ferrure (10) sur le deuxième côté de siège de véhicule, les deux indicateurs (51, 52) indiquant respectivement l'état de verrouillage de la ferrure (10) associée, et les deux indicateurs (51, 52) commandant un indicateur global (61) avec une fonction logique OU afin d'indiquer de manière visible l'état verrouillé d'au moins l'une des deux ferrures (10).

10. Système de ferrure selon la revendication 9, **caractérisé en ce que** les indicateurs (51, 52) peuvent tourner par rapport à un axe (A) et possèdent un pointeur faisant saillie dans le sens radial dont la position angulaire correspondante indique l'état de verrouillage de la ferrure (10) associée.

11. Système de ferrure selon l'une des revendications 9 ou 10, **caractérisé en ce que** les deux indicateurs (51, 52) ou des parties de ceux-ci sont disposés adjacents dans l'espace et les deux agissent sur l'indicateur global (61), notamment par l'intermédiaire d'un ressort de couplage (65).

12. Système de ferrure selon l'une des revendications 9 à 12, **caractérisé en ce que** les deux ferrures (10) possèdent respectivement une première partie de ferrure (111) et une deuxième partie de ferrure (112), qui se verrouillent ensemble dans l'état verrouillé de la ferrure (10) correspondante, peuvent être déverrouillées en faisant tourner un élément d'entraînement (121) et, à l'état déverrouillé de la ferrure (10) correspondante, peuvent tourner l'une par rapport à l'autre autour d'un axe (A), et **en ce qu'**une tige de transmission (107) est disposée parallèlement à l'axe (A) entre les deux ferrures (10) sur les deux côtés de siège de véhicule.

13. Système de ferrure selon la revendication 12, **caractérisé en ce**
- **que** le premier indicateur (51) est relié solidaire en rotation avec l'élément d'entraînement (121) de la ferrure (10) sur le premier côté de siège de conducteur,
- **que** la tige de transmission (107) est reliée solidaire en rotation avec l'élément d'entraînement (121) de la ferrure (10) sur le deuxième côté de siège de conducteur,
- **que** le deuxième indicateur (52) est relié solidaire en rotation avec la tige de transmission (107), notamment un goujon de transmission (107a) de celle-ci, et/ou
- **qu'**il existe un adaptateur (55), lequel est accouplé d'un côté en entraînement par un élément de course libre avec l'un des éléments d'entraînement (121) et accouplé de l'autre côté en entraînement par un élément de course libre avec la tige de transmission (107), notamment un goujon de transmission (107a) de celle-ci.

14. Système de ferrure selon la revendication 13, **caractérisé en ce que** le levier de commande (105) est relié solidaire en rotation ou est réalisé d'un seul tenant avec l'adaptateur (55).

15. Siège de véhicule (1) comprenant une partie d'assise (3') et un dossier (4), lequel peut être pivoté par rapport à la partie d'assise (3') au moyen d'un système de ferrure selon l'une des revendications 9 à 14 monté sur celle-ci, et peut être verrouillé avec différents réglages de l'inclinaison.
